# EUROPEAN PATENT SPECIFICATION

(11) **EP 1 328 462 B1**
(45) Date of publication and mention of the grant of the patent: **04.07.2007**
(21) Application number: 01980190.1
(22) Date of filing: 23.10.2001
(51) Int. Cl.: B66C 23/20, B66C 23/32, F03D 11/04

(54) **A METHOD OF PLACING A CRANE IN CONNECTION WITH A WINDMILL**
VERFAHREN ZUM ANBRINGEN EINES KRANES AN EINER WINDMÜHLE
PROCEDE DE MONTAGE D'UNE GRUE ASSOCIEE A UNE EOLIENNE

(30) Priority: 25.10.2000 DK 200001598
(43) Date of publication of application: 23.07.2003
(73) Proprietor: NORDEX ENERGY GmbH, 22848 Norderstedt (DE)
(72) Inventor: EILERSEN, Jesper, West, DK-7000 Fredericia (DK)
(74) Representative: Hauck Patent- und Rechtsanwälte
(86) International application number: PCT/DK2001/000698
(87) International publication number: WO 2002/034664

(56) References cited:
- WO-A1-96/10130
- WO-A1-97/21621
- GB-A- 2 087 346
- US-A- 5 426 907

## Description

A method of plating a crane in connection with a windmill, including particularly when carrying out assembly and repair, when replacing components in the nacelle, in connection with the wings or when performing other operations on the windmill.

It is generally known to perform assembly, service, etc. on windmills by means of mobile cranes. When the windmill is placed on land, it is frequently necessary to lay out runway plates in order for the necessary mobile crane to be transported or driven from an asphalt road or the like to the mill. This process is both time-consuming and expensive.

Frequently, a part of a mill is disassembled for purposes of repair and then has to be hoisted up into the mill and be mounted again. While, the part, e.g. a gear, is under repair, the mobile crane is left unemployed, which involves relatively great costs. If, on the other hand, the windmill is placed offshore, a ship equipped with extensible legs is normally used. These ships are normally called jack-up ships. Alternatively, floating cranes are used for the service work.

These known methods inter alia for the service or repair of windmills all make demands that cause the process to be unreasonably expensive. What is in mind is particularly the transport of crane equipment, the establishment of load-carrying surfaces on land, and on wind and weather when offshore windmills are involved.

To overcome some of the above-mentioned problems, the German documents DE 19741988 and DE 19647515 disclose methods and devices where a separate crane climbs the tower of the windmill and is secured. The climbing function is performed by means of a two-part crane arm which is extended and secured, following which the crane arm is closed together and thereby has its lower part hoisted a distance. Then the lower part may be secured and after that the upper part of the crane arm, which can then be extended and secured, etc. This is a slow and cumbersome process, in particular because of the step-wise securing and release function. The securing easily scratches or scores the lacquering/galvanization of the mill tower, which subjects the tower to corrosion, and thereby the service life of the tower is reduced considerably.

WO 9610130 discloses a lifting device which is pivotally mounted on the nacelle of the mill, and which can service the nacelle and the wings from this position. The problem of the device is that it is permanently mounted on the nacelle. A lifting device capable of lifting the heavier components of the nacelle or the wings as one common arrangement is relatively expensive. Since the lifting device is permanently mounted and can therefore just be used on one and the same mill, the price must be added to the price of the mill, which is a problem because of the great price competition on the market for windmills. In addition, the lifting device is freely exposed to wind and weather, and therefore the service intervals are short and thereby large in number. Another problem is the wind noise which is generated by the flow of the air around corners and edges of the lifting device. This is negative, because there is already much public debate about noise pollution from windmills. A further problem concerning the flow of the air around the lifting device is that this flow is interrupted, which reduces the efficiency of the mill.

An object of the invention is to make it possible to use a crane in connection with a windmill without this affecting the price of the mill considerably. Another object is to provide a method whereby a crane may be placed temporarily on a windmill quickly, easily and effectively. Still another object is to ensure that it is not necessary to use expensive, big mobile cranes, or, offshore, not necessary to use floating cranes or so-called jack-up ships.

The novelty of the method is that the windmill comprises at least one permanently mounted assembly crane which is used for hoisting and mounting at least a separate service crane, and that the service crane is temporarily secured for operation to a foundation in or at the nacelle.

This ensures that the permanently mounted assembly crane need only be so strong that it can hoist the separate service crane into position for operation, while the service crane may be of such a strong structure as is deemed necessary with a view to occurring tasks, and the service crane costs may be distributed on a large number of windmills, which can use the same service crane in succession. A further advantage is that the service crane may easily and quickly be placed in position by just one lifting operation. Another advantage is that the service crane, even in a strong structure, is only of such a size as will allow it to be transported by an ordinary truck or on an ordinary ship in case of offshore windmills. The method may moreover comprise using the assembly crane for hoisting and mounting at least a jib in or at the nacelle. This ensures that the mounting crane does not have to be able to lift burdens with a great overhang at the side of nacelle, the structural strength being achieved from the jib. This provides a further saving on the permanently mounted assembly crane, since also the jib may be used together with other windmills.

In a preferred embodiment, the jib may comprise a tackle which may be displaced in the longitudinal direction of the jib. This ensures that a load, which has been lifted by the use of the jib, may also be displaced so that the load may e.g. be mounted in a given position, which could otherwise not be reached. This deducts further necessary functionality from the assembly crane, whose price can thereby be reduced further.

In still a further embodiment, a wire may be run by means of the assembly crane from the service crane to the jib. This ensures that e.g. the lifting wire of the service crane may be connected easily and quickly to the jib.

In a particularly preferred variant of the method, the service crane may be hoisted to the jib by the use of its own lifting wire. This provides a further saving on the assembly crane, as this then does not have to be able to lift the service crane, but just its wire, the jib or other minor things which will almost always be of a considerably lower weight.

In an expedient embodiment, substantially unaided or by means of the jib and the tackle, the service crane may be placed on a foundation for temporary attachment.

In still a further expedient embodiment, the service crane may be removed from the windmill after completed use, said assembly crane being used, at least partly, for disassembling and lowering the service crane. Alternatively, the service crane can lower itself using the wire. After completed use, the service crane is transported to one or more other windmills for use again.

Finally, the method enables the service crane to perform all the tasks that may occur in connection with the assembly, service or repair of the windmill. As a result of this property there will be no situations where nevertheless it is necessary to provide a traditional service crane in the form of a mobile crane on a truck, a floating crane or a jack-up ship.

The invention will be described below by means of drawings which schematically show the invention, in which:
- Fig. 1: shows a windmill and crane types according to the prior art.
- Fig. 2: shows a windmill, with an assembly crane visible on the nacelle.
- Fig. 3: shows the nacelle where a jib is mounted.
- Fig. 4: shows the nacelle with mounted jib and with the service crane on its way up.
- Fig. 5: shows the nacelle with the mounted service crane.

On the basis of the figures the problem and the mode of operation of the invention will be described by way of example, reference being made in the text to positional numerals that are shown in the drawings. The figures are therefore just to be considered as examples of embodiments.

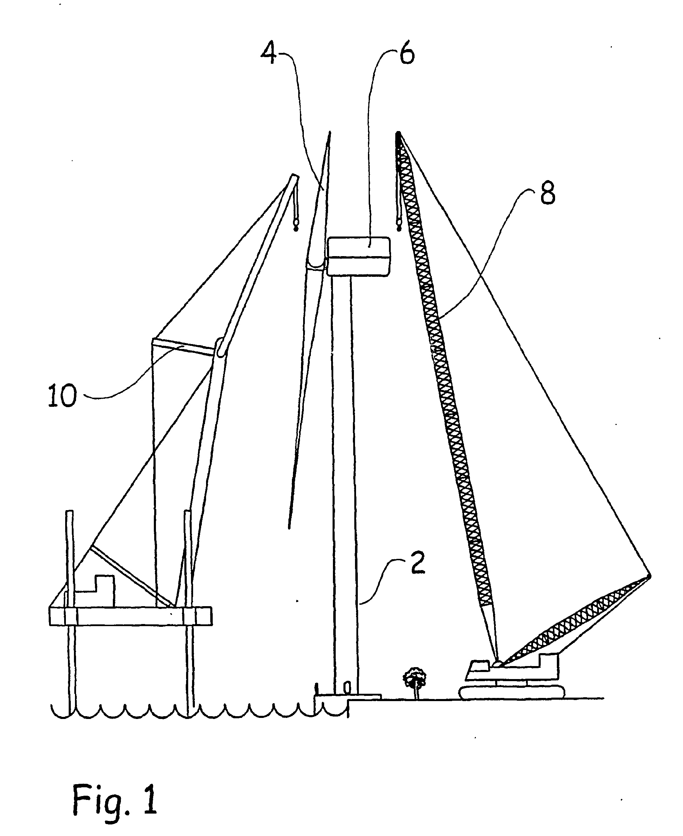

Fig. 1 shows how service or repair is normally carried out on windmills using a crane. This crane will typically be a mobile crane 8 of some type if the windmill 2 is placed on land. If the windmill 2 is placed offshore, it is necessary to use a floating crane 10 or a so-called jack-up ship 10. These types of cranes 8, 10 are cumbersome to transport and therefore cannot always be available within the desired period of time.

The windmill 2 where a crane has to be used may perhaps have a defect in connection with the wings 4 or in the nacelle 6 that requires that the part concerned must either be lowered or hoisted. For example, it may be a matter of making a repair on a gear, which will mean that the gear first has to be disassembled and then be lowered and taken to a workshop for repair. After completed repair, the gear then has to be hoisted in the mill again and be remounted. This requires a crane that can lower or lift the components which often weigh several ton.

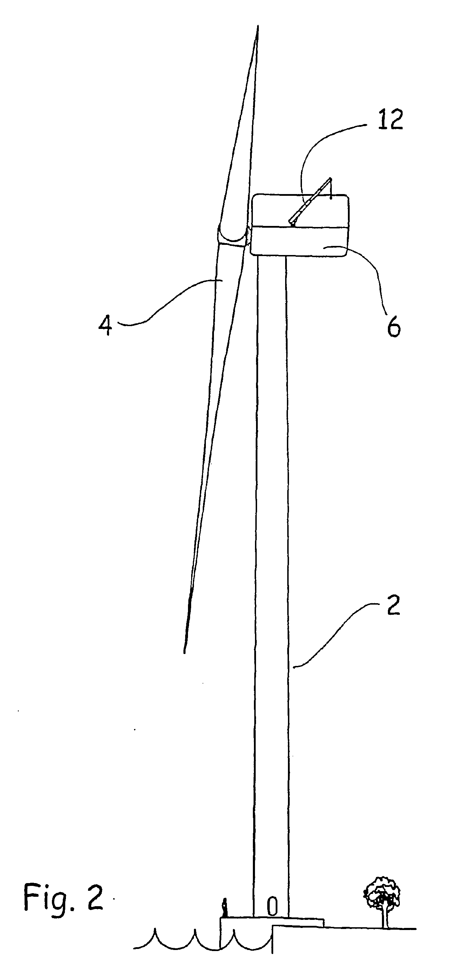

Fig. 2 is a lateral view of a windmill 2, where an assembly crane 12 is visible at the side of the nacelle 6, which assembly crane may be of assistance e.g. in mounting operations of various types in the nacelle 6. The assembly crane 12 is not necessarily dimensioned to be able to lift heavy spare parts up in the mill 2.

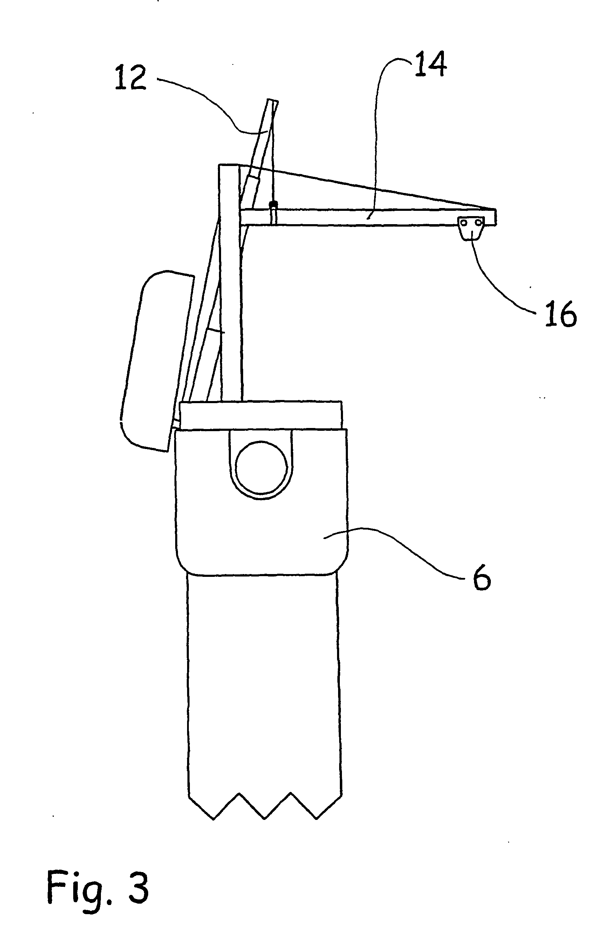

Fig. 3 shows the first steps in connection with preparation e.g. before service according to the invention. The figure shows an enlarged section of the windmill 2 from fig. 2, with focus on the nacelle 6 at the top of the windmill. The figure shows an assembly crane 12 used for the mounting of a jib 14 equipped with a tackle 16 which can be displaced in the longitudinal direction of the jib 14. The jib 14 with tackle 16 has been hoisted up in the windmill 2 by means of the assembly crane 12. The jib 14 is mounted by means of the assembly crane 12 on the nacelle 6 on a suitable foundation, which may be a plate or frame, which is permanently mounted or has e.g. been temporarily secured beforehand. When the mounting of the jib 14 has been completed, the wire of the assembly crane 12 may be lowered with a view to pulling up the wire 22 of the service crane. This is wound on a winch 20 on the service crane 18.

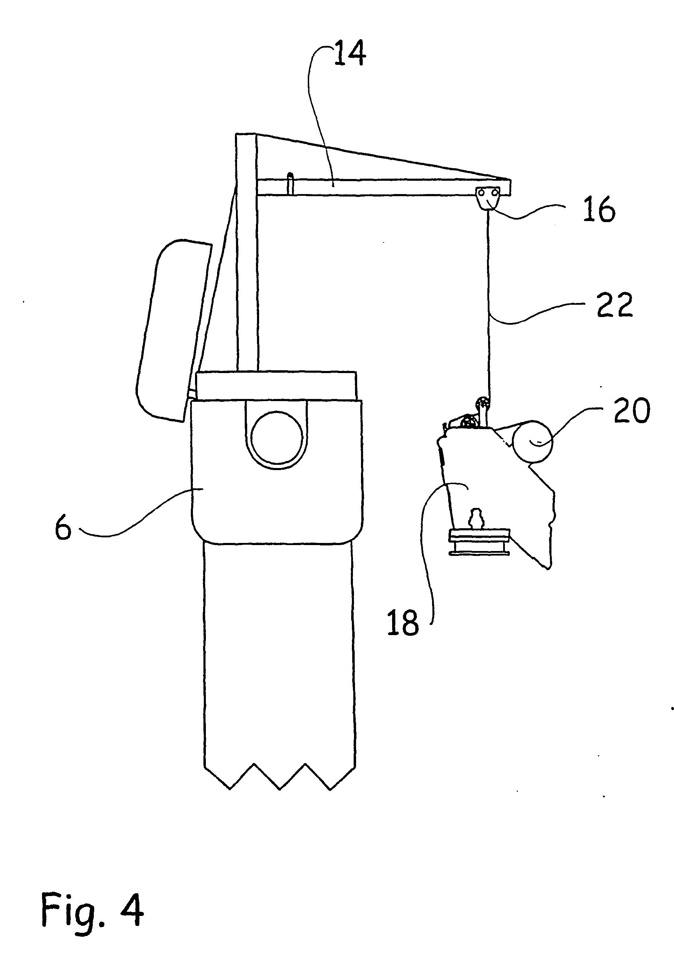

Fig. 4 shows the service crane 18 on its way up to the nacelle 6. The wire 22 of the service crane is secured in the tackle 16 of the jib 14, and the service crane 18 pulls itself up by means of a winch 20. When the service crane 18 has hoisted itself, it may be placed in position on its foundation 24 by means of the displaceable tackle 16 on the jib 14. The foundation 24 may be permanently mounted, built-in or be a separate unit which is temporarily placed in or at the nacelle 6.

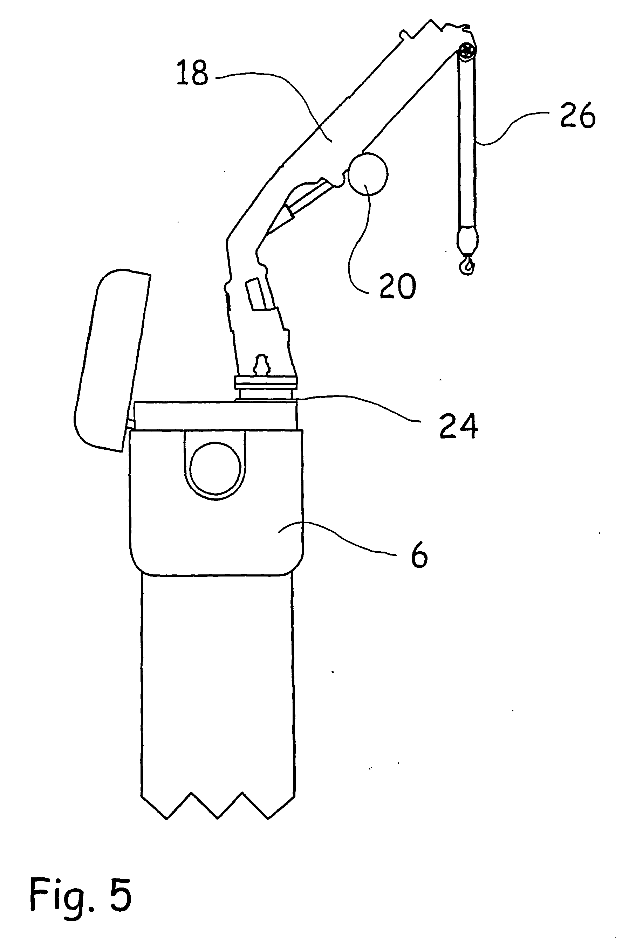

Fig. 5 shows the service crane 18 in the mounted state where the jib 14 is disassembled and the crane 18 is extended and ready for use. The disassembled jib 14 may either be lowered by means of an assembly crane 12 or by means of the lifting wire 26 of the service crane. The lifting wire 26 of the service crane as well as the service crane 18 are preferably dimensioned such that any part that might have to be replaced in the windmill may be lifted or lowered as needed.

## Claims

1. A method of placing a crane in connection with a windmill (2), including particularly when carrying out assembly and repair, when replacing components in the nacelle (6), in connection with the wings (4) or when performing other operations on the windmill (2), said windmill (2) comprises at least a permanently mounted assembly crane (12), the method comprising the step of using said assembly crane (12) for hoisting and mounting at least a separate service crane (18), and by temporarily securing the service crane (18) for operation on a foundation (24) in or at the nacelle (6).

2. A method of placing a crane in connection with a windmill (2) according to claim 1, **characterized in that** the assembly crane (12) is used for hoisting and mounting at least a jib (14) in or at the nacelle (6).

3. A method of placing a crane in connection with a windmill (2) according to claim 2, **characterized in that** the jib (14) comprises a tackle (16) which may be displaced in the longitudinal direction of the jib (14).

4. A method of placing a crane in connection with a windmill (2) according to claims 2 or 3, **characterized in that** a wire (22) is run by means of the assembly crane (12) from the service crane (18) to the jib (14).

5. A method of placing a crane in connection with a windmill (2) according to claim 4, **characterized in that** the service crane (18) is hoisted to the jib (14) using the wire (22).

6. A method of placing a crane in connection with a windmill (2) according to one or more of claims 1-5, **characterized in that** substantially unaided or by means of the jib (14) and the tackle (16) the service crane (18) is placed on a foundation (24) for temporary attachment.

7. A method of placing a crane in connection with a windmill (2) according to one or more of claims 1-6, **characterized in that** the service crane (18) is removed from the windmill (2) after completed use.

8. A method of placing a crane in connection with a windmill (2) according to one or more of claims 1-7, **characterized in that** the assembly crane (12) is used at least partly for disassembling and lowering the service crane (18) when the use of it has been completed.

9. A method of placing a crane in connection with a windmill (2) according to one or more of claims 4-8, **characterized in that** the service crane (18) lowers itself using the wire (22).

10. A method of placing a crane in connection with a windmill (2) according to one or more of claims 1-9, **characterized in that**, after completed use, the service crane (18) is transported to one or more other windmills (2) for further use.

## Patentansprüche

1. Verfahren zum Anbringen eines Krans an einer Windkraftanlage (2), umfassend insbesondere beim Ausführen von Montage- und Reparaturarbeiten, wenn Bauteile in der Gondel (6) ausgewechselt werden, zum Anbringen an die Flügel (4) oder beim Ausführen anderer Operationen an der Windkraftanlage (2), wobei die Windkraftanlage (2) mindestens einen permanent montierten Montagekran (12) umfasst, wobei das Verfahren den Schritt des Verwendens des Montagekrans (12) zum Heben und Montieren mindestens eines separaten Servicekrans (18) umfasst und, durch vorübergehendes Sichern des Servicekrans, (18) zum Betreiben an einem Fundament (24) in oder an der Gondel (6).

2. Verfahren zum Anbringen eines Krans an einer Windkraftanlage (2) nach Anspruch 1, **dadurch gekennzeichnet, dass** der Montagekran (12) zum Heben und Montieren mindestens eines Auslegers (14) in oder an der Gondel (6) verwendet wird.

3. Verfahren zum Anbringen eines Krans an einer Windkraftanlage (2) nach Anspruch 2, **dadurch gekennzeichnet, dass** der Ausleger (14) einen Flaschenzug (16) umfasst, der in Längsrichtung des Auslegers (14) verschoben werden kann.

4. Verfahren zum Anbringen eines Krans an einer Windkraftanlage (2) nach Ansprüchen 2 oder 3, **dadurch gekennzeichnet, dass** ein Drahtseil (22) mittels des Montagekrans (12) vom Servicekran (18) zum Ausleger (14) verläuft.

5. Verfahren zum Anbringen eines Krans an einer Windkraftanlage (2) nach Anspruch 4, **dadurch gekennzeichnet, dass** der Servicekran (18) unter Verwendung des Drahtseils (22) zum Ausleger (14) gehoben wird.

6. Verfahren zum Anbringen eines Krans an einer Windkraftanlage (2) gemäß einem oder mehreren der Ansprüche 1-5, **dadurch gekennzeichnet, dass** der Servicekran (18) im Wesentlichen ohne Hilfe oder mittels des Auslegers (14) und des Flaschenzugs (16) auf einem Fundament (24) zum vorübergehenden Befestigen platziert ist.

7. Verfahren zum Anbringen eines Krans an einer Windkraftanlage (2) gemäß einem oder mehreren der Ansprüche 1-6, **dadurch gekennzeichnet, dass** der Servicekran (18) nach beendeter Verwendung von der Windkraftanlage (2) entfernt wird.

8. Verfahren zum Anbringen eines Krans an einer Windkraftanlage (2) gemäß einem oder mehreren der Ansprüche 1- 7, **dadurch gekennzeichnet, dass** der Montagekran (12) mindestens teilweise zum Auseinandernehmen und Absenken des Servicekrans (18) verwendet wird, wenn seine Verwendung beendet worden ist.

9. Verfahren zum Anbringen eines Krans an einer Windkraftanlage (2) gemäß einem oder mehreren der Ansprüche 4- 8, **dadurch gekennzeichnet, dass** der Servicekran (18) sich selbst unter Verwendung des Drahtseils (22) absenkt.

10. Verfahren zum Anbringen eines Krans an einer Windkraftanlage (2) gemäß einem oder mehreren der Ansprüche 1 - 9, **dadurch gekennzeichnet, dass** nach beendeter Verwendung, der Servicekran (18) zu einer oder mehreren Windkraftanlagen (2) zur weiteren Verwendung transportiert wird.

## Revendications

1. Procédé de montage d'une grue associée à une éolienne (2), comprenant en particulier la réalisation de l'assemblage et des réparations, le remplacement des composants dans la nacelle (6), en conjonction avec les ailes (4), ou l'exécution d'autres opérations sur l'éolienne (2), la dite éolienne (2) comprend au moins une grue de montage (12) montée de façon permanente, le procédé comprenant l'étape consistant à utiliser ladite grue de montage (12) pour hisser et monter au moins une grue d'entretien (18) séparée, et en fixant temporairement la grue d'entretien (18) pour un fonctionnement sur une fondation (24) dans ou au niveau de la nacelle (6).

2. Procédé de montage d'une grue associée à une éolienne (2) selon la revendication 1, **caractérisé en ce que** la grue de montage (12) est utilisée pour hisser et monter au moins une flèche (14) dans ou au niveau de la nacelle (6).

3. Procédé de montage d'une grue associée à une éolienne (2) selon la revendication 2, **caractérisé en ce que** la flèche (14) comprend un palan (16) qui peut être déplacé dans la direction longitudinale de la flèche (14).

4. Procédé de montage d'une grue associée à une éolienne (2) selon les revendications 2 ou 3, **caractérisé en ce qu'**un câble (22) est tendu au moyen de la grue de montage (12) depuis la grue d'entretien (18) vers la flèche (14).

5. Procédé de montage d'une grue associée à une éolienne (2) selon la revendication 4, **caractérisé en ce que** la grue d'entretien (18) est hissée vers la flèche (14) à l'aide du câble (22).

6. Procédé de montage d'une grue associée à une éolienne (2) selon une ou plusieurs des revendications 1-5, **caractérisé en ce que**, essentiellement sans aide ou bien au moyen de la flèche (14) et du palan (16), la grue d'entretien (18) est installée sur une fondation (24) pour une fixation temporaire.

7. Procédé de montage d'une grue associée à une éolienne (2) selon une ou plusieurs des revendications 1-6, **caractérisé en ce que** la grue d'entretien (18) est enlevée de l'éolienne (2) une fois l'utilisation terminée.

8. Procédé de montage d'une grue associée à une éolienne (2) selon une ou plusieurs des revendications 1-7, **caractérisé en ce que** la grue de montage (12) est utilisée au moins partiellement pour démonter et descendre la grue d'entretien (18) une fois l'utilisation terminée.

9. Procédé de montage d'une grue associée à une éolienne (2) selon une ou plusieurs des revendications 4-8, **caractérisé en ce que** la grue d'entretien (18) se descend elle-même à l'aide du câble (22).

10. Procédé de montage d'une grue associée à une éolienne (2) selon une ou plusieurs des revendications 1-9, **caractérisé en ce que**, une fois l'utilisation terminée, la grue d'entretien (18) est transportée vers une ou plusieurs autres éoliennes (2) pour une autre utilisation.
